# FASCICULE DE BREVET EUROPEEN

(11) **EP 0 373 367 B1**
(45) Date de publication et mention de la délivrance du brevet: **04.05.1994**
(21) Numéro de dépôt: 89120941.3
(22) Date de dépôt: 11.11.1989
(51) Int. Cl.: B65B 51/32, B65B 51/14

(54) **Procédé et dispositif de scellage d'une membrane de fermeture sur un embout**
Verfahren und Vorrichtung zum Versiegeln einer Verschlussmembran auf einem Ausgiessstutzen
Method and device for sealing a closing membrane on a spout

(30) Priorité: 15.12.1988 CH 4633/88
(43) Date de publication de la demande: 20.06.1990
(73) Titulaire: SOCIETE DES PRODUITS NESTLE S.A., 1800 Vevey (CH)
(72) Inventeur: Loeliger, Willi, CH-3510 Konolfingen (CH)

(56) Documents cités:
- EP-A- 0 072 699
- FR-A- 1 514 819

## Description

L'invention concerne un procédé de scellage d'une membrane de fermeture sur la face interne d'un embout d'une poche remplie de liquide. L'invention concerne en outre le dispositif pour la mise en oeuvre de ce procédé.

Le brevet EP-A-72699 mentionne déjà un système de scellage d'une membrane de fermeture sur un embout. Cependant, le système de scellage préconisé dans ce brevet est un système de chauffage direct sur la ligne de scellage suivi d'une descente immédiate du corps chauffant. Or en fin de scellage, on enlève le corps de chauffe au moment où la ligne de scellage est la plus chaude, donc la plus fragile. L'inconvénient est qu'on risque ainsi d'avoir des défauts d'étanchéité du scellage car même de très faibles sollicitations mécaniques sur la zone scellée peuvent décoller la membrane de l'embout.

Le but de la présente invention est de proposer un procédé et un dispositif de scellage permettant d'éliminer les inconvénients précités de manière à avoir un scellage sûr de la poche contenant le liquide.

La présente invention concerne un procédé de scellage d'une membrane de fermeture sur la face interne d'un embout d'une poche remplie de liquide, ledit embout comportant sur sa face externe une membrane déchirable, dans lequel on appuie une plaque refroidie en son centre ayant une dimension plus grande que celle de l'orifice de l'embout contre ladite face interne de l'embout à la fin du remplissage de la poche, puis on monte coaxialement par rapport à la plaque froide un corps de chauffe qui se positionne sous ladite plaque de manière à effectuer le scellage par transmission de chaleur sur la périphérie de ladite plaque, on redescend le corps de chauffe et finalement la plaque, lorsque le scellage s'est refroidi.

Le but du procédé selon l'invention est de maintenir la membrane contre l'embout en position jusqu'à ce que la ligne de scellage soit refroidie. On atteint ce but, grâce à un procédé en plusieurs étapes jouant sur la transmission de chaleur à travers une plaque refroidie en son centre mais conductrice de chaleur sur sa périphérie. Il est bien entendu que le corps de chauffe a un chauffage permanent.

Bien que la forme de la plaque et de l'embout ne soient pas critiques, on utilise de préférence un embout et une plaque de forme circulaire. La plaque est refroidie en son centre et chaude sur la périphérie, lorsqu'on monte le corps de chauffe contre ladite plaque.

Par poche on entend des emballages en plastique souple du domaine alimentaire ou médical. Le matériau plastique utilisé est du polyester ou des multi-couches à base de polyester ou tout autre plastique scellable compatible dans le domaine alimentaire. Par fluide, on entend aussi bien des solutions aqueuses, que du lait , des jus de fruits ou de légumes ou des produits plus visqueux, tels que confitures, marmelades et autres, avec ou sans morceaux.

Le procédé selon l'invention peut être mis en oeuvre avec des poches de au moins deux types différents, soit une poche dans laquelle l'embout comporte une membrane interne adhérant au moment du remplissage déjà partiellement audit embout, comme dans le brevet EP 72699, soit une poche avec embout sans membrane interne de fermeture, auquel cas on scelle contre l'embout la partie de membrane de la poche directement en face dudit embout.

Dans cette seconde forme de réalisation, il est préférable que dans les diverses étapes du procédé on évite toute plissure de la partie de membrane à sceller contre l'embout. On maintient à cet effet en place la membrane à sceller sur la plaque froide avant le remplissage de la poche grâce à un système de vide partiel sur ladite plaque. Il est important d'éviter ces plissures car elles sont sources de tensions lors des manipulations subséquentes. Le vide sur la plaque est compris entre 4.10³ et 10⁴ Pa.

Au moment de la mise sous vide, du scellage et du refroidissement la plaque appuie contre l'embout à une pression comprise entre 13.10⁵ et 26.10⁵ Pa.

La température du corps de chauffe dépend du type de matériau à sceller. Elle est normalement comprise entre 120 et 320°C. Les différentes étapes du scellage seront mieux explicitées en référence aux figures.

On utilise de préférence selon l'invention un dispositif de remplissage aseptique tel que décrit dans la demande de brevet CH 4584/87 du 25.11.1987.

L'invention concerne en outre le dispositif pour la mise en oeuvre du procédé comprenant une plaque d'appui susceptible d'être refroidie en son centre et conductrice de chaleur sur sa périphérie, montée sur un premier corps cylindrique et mus par un premier système et un corps de chauffe entourant ledit corps cylindrique sous la plaque d'appui et un corps isolant entourant le corps de chauffe et solidaire de celui-ci, montés sur un second corps cylindrique et mue coaxialement par rapport au premier corps cylindrique par un second système, le premier système faisant partie intégrante du corps de chauffe, du corps isolant et du second corps cylindrique.

Il est important que le corps de chauffe soit entouré d'un corps isolant, car ce dernier permet d'éviter que la poche ne touche le corps de chauffe.

Le premier et le second système de déplacement sont de préférence des systèmes pneumatiques. Mais il serait également possible d'utiliser des systèmes hydrauliques ou mécaniques.

Dans le cas de déplacement pneumatique, le premier système comprend un cylindre et un piston et le second système comprend une tige de piston reliée extérieurement au cylindre du premier système et un piston déplaçable dans un double cylindre mobile, la seconde chambre du double cylindre comportant deux pistons reliés entre eux dont le second piston coulisse dans un cylindre fixe.

Le corps de chauffe comporte au moins deux résistances chauffantes pour permettre une bonne répartition de la chaleur. Le matériau du corps de chauffe n'est pas critique, on utilise par exemple un corps métallique tel que cuivre ou aluminium.

Pour que la plaque d'appui soit bien refroidie, on prévoit dans le premier corps cylindrique un système de refroidissement à l'eau. Cette plaque d'appui comporte des rainures ou des renforcements reliées à un système pour faire le vide.

La puissance de chauffage n'est pas critique. Il faut cependant, pour réaliser un bon scellage, que le corps de chauffe ait une puissance de chauffage supérieure au refroidissement de la plaque, de manière à ce que la périphérie de la plaque soit bien chaude, lorsque ledit corps de chauffe appuie contre la plaque.

Le matériau du corps isolant n'est pas critique. On utilise par exemple de la céramique. Si on veut garantir une très bonne isolation de chaleur, on peut également prévoir dans le corps isolant un système de refroidissement à l'eau.

La suite de la description est faite en référence aux dessins sur lesquels:
- Fig. 1: est une vue de la poche dans sa première forme de réalisation,
- Fig. 2: est une vue de la poche dans sa seconde forme de réalisation,
- Fig. 3: est une coupe partielle de la partie supérieure du dispositif selon l'invention,

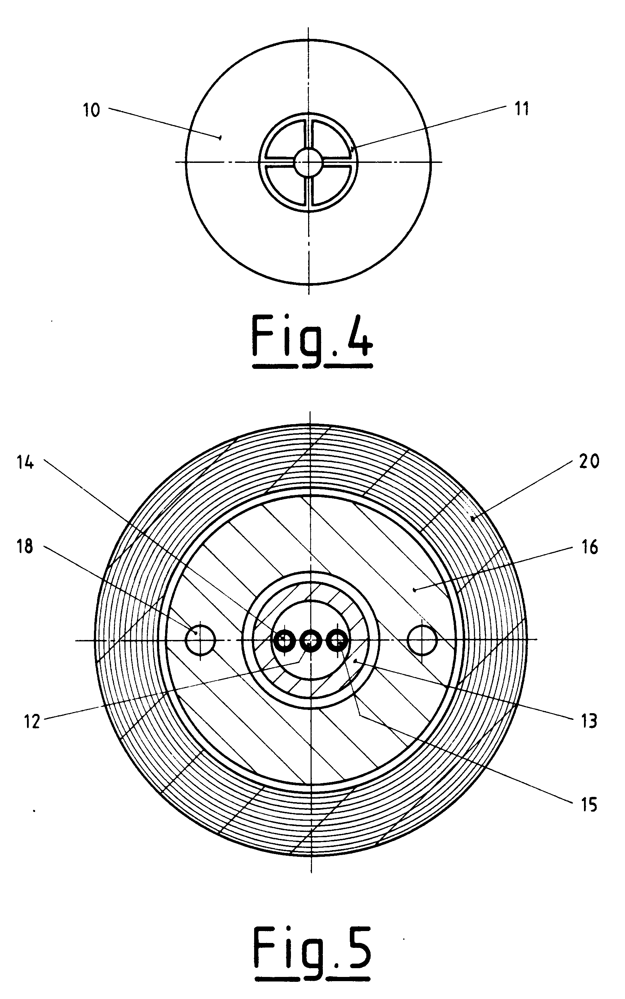

- Fig. 4: est une coupe selon la ligne 4-4 de la Fig. 3,
- Fig. 5: est une coupe selon la ligne 5-5 de la Fig. 3 et
- Fig. 6: est une représentation de la séquence des différentes étapes du procédé selon l'invention.

La poche (1) comporte un embout (2), une membrane déchirable (3) et une membrane interne (4) adhérant au moment du remplissage de la poche déjà partiellement à l'embout (2). En fin de remplissage, le dispositif de scellage monte selon A et refoule ainsi le produit contenu dans la poche. La face (5) de la poche doit être en un matériau non scellable contre la membrane interne (4).

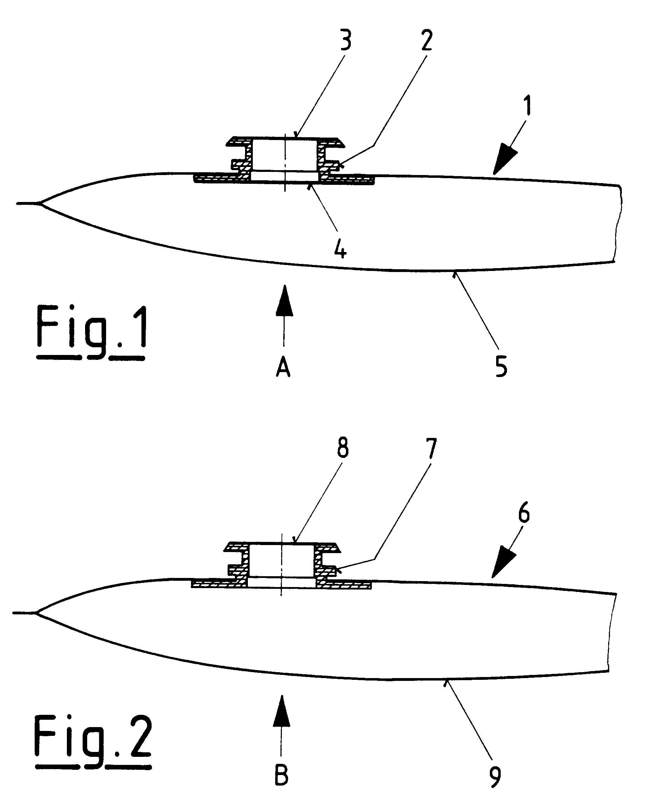

La Fig. 2 donne une seconde version de la poche (6) comportant un embout (7) et une membrane déchirable (8). Dans ce cas, au moment du scellage, le dispositif selon l'invention monte selon B et c'est la membrane (9) qui va être scellée contre la face interne de l'embout (7).

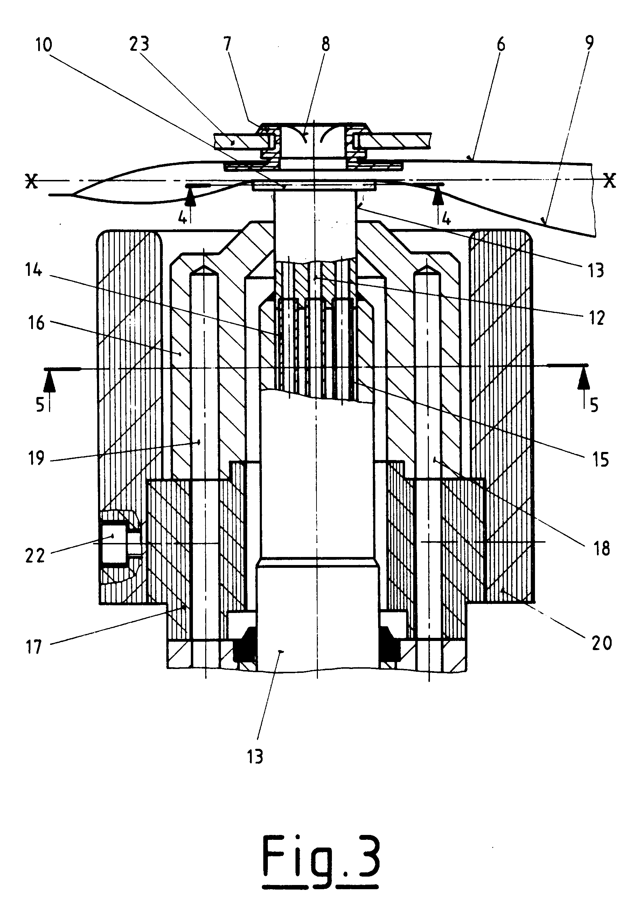

La Fig. 3 montre une coupe partielle du haut du dispositif selon l'invention avec une poche selon la Fig. 2 et sans le dispositif de remplissage aseptique. Celui-ci est décrit dans la demande de brevet précitée CH 4584/87.

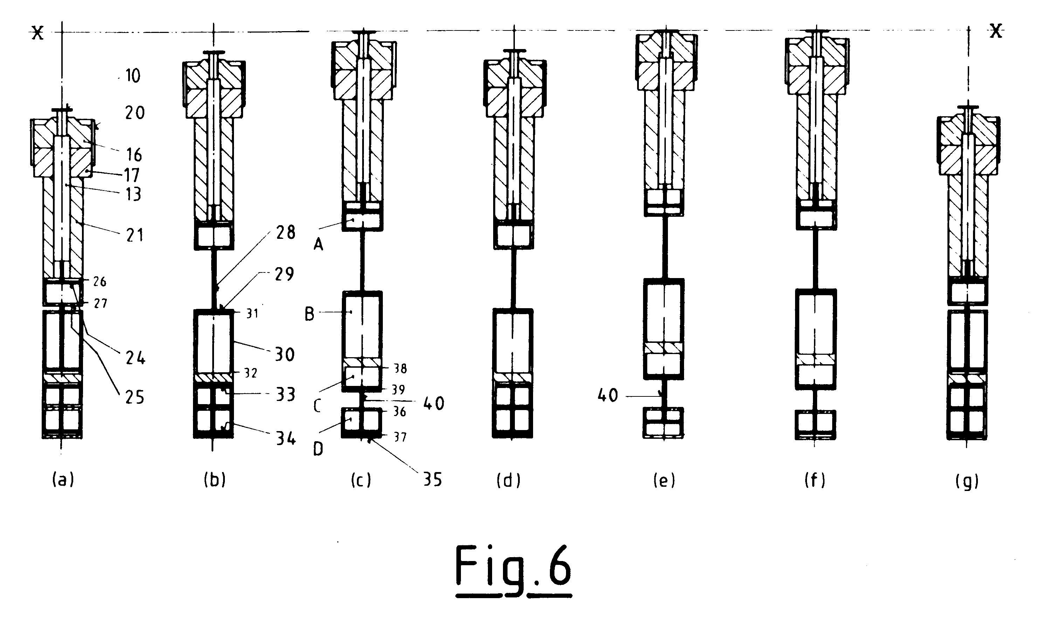

Les mâchoires (23) permettent le maintien de la poche (6) en place. La plaque d'appui (10) montée sur un corps cylindrique (13) comporte des rainures (11) reliées par une canalisation (12) à un système pour faire le vide (non représenté), par exemple une pompe à vide. Le corps cylindrique comprend en outre des canalisations (14) et (15) d'arrivée et de sortie d'eau pour le refroidissement de la plaque (10). Le corps cylindrique (13) coulisse dans un corps de chauffe (16) monté sur un corps isolant (17) grâce à un système pneumatique qui sera décrit en référence à la Fig. 6. Le corps de chauffe (16) comporte deux résistances chauffantes (18, 19) alimentées par le courant électrique. Le corps isolant (20) prévu pour rester froid entoure le corps de chauffe. Comme on le voit sur la Fig. 3, le corps isolant (20) garantit que la poche (6) ne sera jamais en contact avec le corps de chauffe. Les éléments (16, 17, 20) sont montés sur un corps cylindrique (21) (Fig. 6) et sont déplaçables grâce à des moyens pneumatiques qui seront explicités sur la Fig. 6. Le corps isolant (20) solidaire du corps de chauffe (16) est maintenu en place grâce aux vis (22) dont une seule est représentée.

La Fig. 6 donne les moyens pneumatiques de déplacement des éléments et la suite des étapes du procédé selon l'invention. La ligne x-x de la Fig. 6 a également été notée sur la Fig. 3. La Fig. 3 représente la position (f). Le corps cylindrique (13) est relié à un piston (24) déplaçable dans un cylindre (25) comportant deux entrées d'air (26) et (27). Le corps de chauffe (16), les corps isolants (17) et (20) et le corps cylindrique (21) sont reliés à une tige (28) de piston (29) déplaçable dans un double cylindre mobile (30). La chambre B du piston (29) comporte des entrées d'air (31) et (32). La seconde chambre C du double cylindre comporte un piston (33). Ce piston (33) est relié par une tige (40) au piston (34) qui coulisse dans un cylindre fixe (35) avec chambre D. Ce dernier cylindre comporte des entrées d'air (36) et (37). La seconde chambre C du double cylindre (30) comporte des entrées d'air (38) et 39).

Les étapes du procédé sont les suivantes:
a) position de départ
b) stérilisation de la membrane extérieure 8 avec le dispositif de remplissage aseptique (non représenté),
c) mise sous vide par la canalisation (12) de la plaque (10),
d) déchirage de la membrane (8) et remplissage de la poche avec le système de remplissage aseptique,
e) rinçage et scellage,
f) refroidissement du scellage et
g) position de départ

Il est bien entendu que le corps de chauffe (16) est chauffé en permanence pendant les opérations, de même que la plaque (10) est refroidie en permanence.

Le fonctionnement du dispositif est le suivant:

Pour arriver en position a), on fait entrer de l'air en (27) dans la chambre A, en (31) dans la chambre B, en (39) dans la chambre C et en (36) dans la chambre D, la plaque (10) est levée. Pour passer en position b), on fait entrer de l'air en (32) dans le chambre B. Une entrée d'air par (38) donne la position c). Dans cette position, la plaque (10) est sous vide de sorte que la membrane (9) de la poche (6) est aspirée contre (10) et ladite poche ne peut plus bouger. On maintient ainsi pendant le scellage une position inchangée de la membrane (9). Pour passer en d) on fait entrer de l'air en (39). On revient ainsi en position b), le but étant que la plaque (19) tire la face (9) de la poche (6) pour l'écarter de l'embout (7). C'est l'étape de déchirage de la membrane (8) et de remplissage de la poche (6). A la fin du remplissage, on fait entrer de l'air par (38) et (37) pour amener le dispositif en position de scellage. On prévoit une pression d'air dans la chambre A inférieure à celle dans les trois autres chambres. On arrive ainsi en position e), c'est-à-dire la plaque (10) au contact du corps de chauffe (16, 17). Le transfert de chaleur se fait sur le pourtour de la plaque (10), car le centre est réfrigéré en permanence par l'eau. Cette étape de scellage dure de 1 à 3 secondes. La position f) dure de 1 à 2 secondes et figure le refroidissement du scellage. Pour y arriver on fait une entrée d'air par (36). On revient finalement à la position initiale par une entrée d'air en (31) et (39). Il est bien entendu que la séquence a) à g) est commandée par une électronique programmée.

La présente invention permet de réaliser un scellage de poche de grande sûreté à une cadence compatible à des lignes de fabrication.

## Revendications

1. Procédé de scellage d'une membrane de fermeture sur la face interne d'un embout (7) d'une poche remplie de liquide, ledit embout comportant sur sa face externe une membrane déchirable (8), caractérisé en ce qu'on appuie une plaque (10) refroidie en son centre mais conductrice de chaleur sur sa périphérie ayant une dimension plus grande que celle de l'orifice de l'embout contre ladite face interne de l'embout à la fin du remplissage de la poche, puis on monte coaxialement par rapport à la plaque froide un corps de chauffe (16) qui se positionne sous ladite plaque de manière à effectuer le scellage par transmission de chaleur à travers la périphérie de ladite plaque, on redescend le corps de chauffe (16) et finalement la plaque (10), lorsque le scellage s'est refroidi.

2. Procédé selon la revendication 1, caractérisé en ce que l'embout (7) et la plaque (10) sont de forme circulaire.

3. Procédé selon l'une des revendications 1 et 2, caractérisé en ce qu'on scelle contre l'embout (7) une membrane interne (4) adhérant au moment du remplissage déjà partiellement audit embout.

4. Procédé selon l'une des revendications 1 et 2, caractérisé en ce qu'on scelle contre l'embout (7) la partie de membrane de la poche (6) directement en face dudit embout.

5. Procédé selon la revendication 4, caractérisé en ce qu'on maintient en place la membrane à sceller sur la plaque froide (10) avant le remplissage de la poche grâce à un système de vide partiel sur ladite plaque.

6. Procédé selon la revendication 5, caractérisé en ce que le vide sur la plaque (10) est compris entre 4.10³ et 10⁴ Pa.

7. Procédé selon l'une des revendications 1 à 6, caractérisé en ce qu'on appuie la plaque (10) contre l'embout (7) à une pression comprise entre 13.10⁵ et 26.10⁵ Pa.

8. Procédé selon l'une des revendications 1 à 7, caractérisé en ce que la température du corps de chauffe (16) est comprise entre 120 et 320°C.

9. Dispositif de scellage pour la mise en oeuvre du procédé selon l'une des revendications 1 à 8, caractérisé en ce qu'il comprend une plaque d'appui (10) susceptible d'être refroidie en son centre et conductrice de chaleur sur sa périphérie, montée sur un premier corps cylindrique (13) et mue par un premier système et un corps de chauffe (16) entourant ledit corps cylindrique sous la plaque d'appui (10) et un corps isolant (20) entourant le corps de chauffe et solidaire de celui-ci, montés sur un second corps cylindrique (21) et mus coaxialement par rapport au premier corps cylindrique (13) par un second système, le premier système faisant partie intégrante du corps de chauffe (16), du corps isolant (20) et du second corps cylindrique (21).

10. Dispositif de scellage selon la revendication 9, caractérisé en ce que le premier système comprend un cylindre (25) et un piston (24) et le second système comprend une tige (28) de piston reliée au premier système et un piston (29) déplaçable dans un double cylindre mobile (30), la seconde chambre (C) du double cylindre comportant un piston (33) relié par une tige (40) à un piston (34) coulissant dans un cylindre fixe (35).

11. Dispositif de scellage selon l'une des revendications 9 et 10, caractérisé en ce que le corps de chauffe (16) comporte au moins deux résistances chauffantes (18, 19).

12. Dispositif selon l'une des revendications 9 à 11 caractérisé en ce que le premier corps cylindrique (13) comprend un système de refroidissement à l'eau (14, 15).

13. Dispositif selon l'une des revendications 9 à 12, caractérisé en ce que la plaque d'appui (10) comporte des rainures (11) reliées à un système pour faire le vide.

## Claims

1. A process for sealing a closure membrane to the inner surface of a spout (7) of a bag filled with liquid, the spout comprising on its outer surface a tearable membrane (8), characterized in that a plate (10), which is cooled at its centre but conducts heat at its circumference and which is larger in size than the spout orifice, is pressed against the inner surface of the spout for filling the bag, after which a heating element (16) is raised coaxially relative to the cold plate, positioning itself beneath the plate to carry out the sealing process by heat transfer through the circumference of the plate, and the heating element (16) and finally the plate (10) are lowered again when the seal has cooled.

2. A process as claimed in claim 1, characterized in that the spout (7) and the plate (10) are circular in shape.

3. A process as claimed in claim 1 or 2, characterized in that an inner membrane (4) already adhering partly to the spout at the moment of filling is sealed against the spout (7).

4. A process as claimed in claim 1 or 2, characterized in that that part of the membrane of the bag (6) directly opposite the spout is sealed to the spout (7).

5. A process as claimed in claim 4, characterized in that the membrane to be sealed is held in place on the cold plate (10) before filling of the bag by means of a system for applying a partial vacuum to the plate.

6. A process as claimed in claim 5, characterized in that the vacuum applied to the plate (10) is between 4.10³ and 10⁴ Pa.

7. A process as claimed in any of claims 1 to 6, characterized in that the plate (10) is pressed against the spout (7) under a pressure of 13.10⁵ to 26.10⁵ Pa.

8. A process as claimed in any of claims 1 to 7, characterized in that the temperature of the heating element (16) is between 120 and 320°C.

9. An apparatus for carrying out the process claimed in any of claims 1 to 8, characterized in that it comprises a first support plate (10) which is designed to be cooled at its centre and to conduct heat at its circumference and which is mounted on a first cylindrical body (13), being displaced by a first system, a heating element (16) surrounding the cylindrical body beneath the support plate (10) and an insulating body (20) surrounding the heating element and integral therewith, the heating element and insulating body being mounted on a second cylindrical body (21) and being displaced coaxially relative to the first cylindrical body (13) by a second system, the first system being an integral part of the heating element (16), the insulating body (20) and the second cylindrical body (21).

10. A sealing apparatus as claimed in claim 9, characterized in that the first system comprises a cylinder (25) and a piston (24) and the second system comprises a piston rod (28) connected to the first system and a piston (29) displaceable in a movable double cylinder (30), the second chamber (C) of the double cylinder comprising a piston (33) connected by a rod (40) to a piston (34) sliding in a fixed cylinder (35).

11. A sealing apparatus as claimed in claim 9 or 10, characterized in that the heating element (16) comprises at least two heating resistances (18,19).

12. An apparatus as claimed in any of claims 9 to 11, characterized in that the first cylindrical body (13) comprises a water cooling system (14,15).

13. An apparatus as claimed in any of claims 9 to 12, characterized in that the support plate (10) comprises grooves (11) connected to a vacuum-generating system.

## Patentansprüche

1. Verfahren zum Versiegeln einer Verschlußmembran auf der Innenseite eines Stutzens (7) eines mit Flüssigkeit gefüllten Beutels, wobei der Stutzen auf seiner Außenseite eine durchtrennbare Membran (8) besitzt, dadurch gekennzeichnet, daß eine in der Mitte gekühlte, an ihrem Umfang jedoch wärmeleitende Platte (10), die eine größere Abmessung als die Öffnung des Stutzens hat, nach dem Füllen des Beutels an die Innenfläche des Stutzens angedrückt wird, anschließend koaxial zur kalten Platte ein Heizkörper (16) nach oben bewegt und unter der Platte positioniert wird, so daß die Versiegelung durch Wärmeübertragung über den Umfang der Platte durchgeführt wird, und der Heizkörper (16) und schließlich die Platte (10) nach dem Abkühlen der Versiegelung wieder nach unten bewegt werden.

2. Verfahren nach Anspruch 1, dadurch gekennzeichnet, daß der Stutzen (7) und die Platte (10) kreisförmig sind.

3. Verfahren nach einem der Ansprüche 1 und 2, dadurch gekennzeichnet, daß an dem Stutzen (7) eine innere Membran (4) versiegelt wird, die bei der Füllung bereits partiell am Stutzen haftet.

4. Verfahren nach einem der Ansprüche 1 und 2, dadurch gekennzeichnet, daß an dem Stutzen (7) der dem Stutzen direkt gegenüberliegende Membranteil des Beutels (6) versiegelt wird.

5. Verfahren nach Anspruch 4, dadurch gekennzeichnet, daß die zu versiegelnde Membran vor dem Füllen des Beutels auf der kalten Platte (10) durch ein System zur Erzeugung eines Unterdrucks auf dieser Platte festgehalten wird.

6. Verfahren nach Anspruch 5, dadurch gekennzeichnet, daß der Unterdruck auf der Platte (10) 4.10³ bis 10⁴ Pa beträgt.

7. Verfahren nach einem der Ansprüche 1 bis 6, dadurch gekennzeichnet, daß die Platte (10) an den Stutzen (7) mit einem Druck von 13.10⁵ und 26.10⁵ Pa angedrückt wird.

8. Verfahren nach einem der Ansprüche 1 bis 7, dadurch gekennzeichnet, daß die Temperatur des Heizkörpers (16) 120 bis 320°C beträgt.

9. Versiegelungsvorrichtung zur Durchführung des Verfahrens nach einem der Ansprüche 1 bis 8, dadurch gekennzeichnet, daß sie eine Andrückplatte (10), die in ihrer Mitte gekühlt werden kann und an ihrem Umfang wärmeleitend ist, auf einem ersten zylindrischen Körper (13) montiert ist und durch ein erstes System bewegt wird, und einen diesen zylindrischen Körper unter der Andrückplatte (10) umgebenden Heizkörper (16) und einen den Heizkörper umgebenden und mit diesem fest verbundenen Isolierkörper (20) besitzt, die auf einem zweiten zylindrischen Körper (21) montiert sind und koaxial bezüglich des ersten zylindrischen Körpers (13) durch ein zweites System bewegt werden, wobei das erste System einen integrierenden Bestandteil des Heizkörpers (16), des Isolierkörpers (20) und des zweiten zylindrischen Körpers (21) bildet.

10. Versiegelungsvorrichtung nach Anspruch 9, dadurch gekennzeichnet, daß das erste System einen Zylinder (25) und einen Kolben (24) und das zweite System eine mit dem ersten System verbundene Kolbenstange (28) und einen Kolben (29) umfaßt, der in einem doppelten beweglichen Zylinder (30) beweglich ist, wobei die zweite Kammer (C) des doppelten Zylinders einen Kolben (33) enthält, der durch eine Stange (40) mit einem Kolben (34) verbunden ist, der in einem feststehenden Zylinder (35) gleitet.

11. Versiegelungsvorrichtung nach einem der Ansprüche 9 und 10, dadurch gekennzeichnet, daß der Heizkörper (16) wenigstens zwei Heizwiderstände (18, 19) besitzt.

12. Vorrichtung nach einem der Ansprüche 9 bis 11, dadurch gekennzeichnet, daß der erste zylindrische Körper (13) ein Wasserkühlsystem (14, 15) besitzt.

13. Vorrichtung nach einem der Ansprüche 9 bis 12, dadurch gekennzeichnet, daß die Andrückplatte (10) Nuten (11) aufweist, die mit einem System zur Erzeugung eines Unterdrucks verbunden sind.
